# EUROPEAN PATENT APPLICATION

(11) **EP 0 613 152 A1**
(43) Date of publication of application: **31.08.1994**
(21) Application number: 94301369.8
(22) Date of filing: 25.02.1994
(51) Int. Cl.: G21C 3/16, G21C 3/28, G21C 5/20

(54) **Mid-enrichment axial blanket for a nuclear reactor fuel rod**

(30) Priority: 26.02.1993 US 23436
(71) Applicant: WESTINGHOUSE ELECTRIC CORPORATION, Pittsburgh Pennsylvania 15222 (US)
(72) Inventor: Freeman, Thomas Raphael, Columbia, SC 29223 (US)
(74) Representative: van Berlyn, Ronald Gilbert

(57) **Abstract**

A nuclear fuel rod (10) has a sealed, elongated hollow cladding tube (12) having an axial stack of fissile fuel pellets (16) contained within the tube (12). The pellets in the stack are provided in an arrangement of axial regions. A middle region (16.1) has fuel pellets having a first enrichment of U-235 being greater than the enrichment of natural uranium. An axial blanket (16-2,16-3), disposed between the middle region and an end of the tube, has fuel pellets having a second enrichment of U-235 being greater than the enrichment of natural uranium and less than the first enrichment. The pellets of the axial blanket may be annular shaped to provide additional plenum.

## Description

This invention relates to fuel rods for fuel assemblies used in nuclear reactors, in particular, mid-enrichment axial blankets for a nuclear fuel rod.

The core of a light water nuclear reactor is typically made up of several fuel assemblies, which, in turn, are made up of an array of cylindrical fuel rods. Each fuel rod is a hollow tube sealed at each end and containing fissile material, such as uranium oxide, enriched with the uranium isotope having an atomic weight of 235 (U-235). The bulk of the uranium in the fuel is the isotope having an atomic weight of 238 (U-238). The fissile fuel is typically in the form of pellets stacked within the fuel rod. The fuel rods are positioned so as to provide a neutron flux in the reactor core sufficient to support a high rate of nuclear fission, which in turn releases a large amount of energy in the form of heat. The fuel rods are vertically disposed and transversely spaced apart from one another such that liquid coolant can be pumped through the core and between the fuel rods, thus extracting heat generated by the nuclear reaction in the core for the production of useful work.

Neutrons produced by the fissioning of the U-235 atoms in turn induce the fissioning of more fuel atoms. Because they are surrounded by less fuel, neutrons released at the ends of the fuel rod have a greater probability of escaping from the core than do neutrons released in the middle of the fuel rod. The neutrons that escape do not produce further fission events. Thus, the fuel near the ends of the rods burns slower than the fuel towards the center. Initially, the spatial distribution of fission inducing neutrons is approximately cosinosoidal along the axis of the fuel rods. With burnup, the distribution becomes flatter. Overall, the depletion of fissile fuel, or burnup, along the length of the fuel rod is non-uniform, with the ends of the rod receiving less burnup than the center. This is inefficient utilization of the U-235 in the fuel rod ends. A fuel rod design that can increase the fuel utilization at the ends of the core will produce significant economic benefits because buying and enriching uranium is a significant part of the total fuel cycle cost.

The typical approach used to increase fuel efficiency is to reduce neutron leakage by employing "axial blankets." Commonly, axial blankets are sections of natural uranium pellets having a U-235 enrichment of 0.711% by weight at both the top and bottom of the fuel rod. Because the U-235 enrichment of the natural uranium blanket is much less than that of standard fuel pellets (usually at least 3.5% U-235), fewer neutrons are generated by fissions of U-235 in the blankets and therefore relatively fewer neutrons escape from the fuel rod ends at the beginning of the fuel cycle. The U-238 atoms absorb neutrons and undergo a transmutation into plutonium. The plutonium is fissile and hence serves as fuel for the latter stages of the fuel cycle, improving the energy output of the fuel rod.

A blanket with natural uranium, however, has several major drawbacks. One is that, since it has such low enrichment, it produces little power at the beginning of the fuel cycle and this results in a higher core peaking factor (the power must be produced somewhere else in the core) . Since the core peaking factor is usually most limiting in the early part of the cycle, the increase in the peaking factor is a significant drawback for the natural uranium blanket.

A second problem is that, in order to achieve the same energy output as fuel rods without axial blankets, the enrichment in the central portion of the rod must be increased to compensate for the reduction of U-235 in the blanket. Fabrication, shipping, and storage facilities are generally limited to a 5% enrichment of U-235 by weight or less. The trend to higher burnup is beginning to push the limit. At the enrichment limit, axial blanket fuel cannot produce as much energy as non-blanket fuel.

A third problem is that, as cycle lengths have increased, the amount of leakage reduction benefit has decreased because of the power increase in the blankets due to plutonium buildup. This means that the benefits are reduced but the problems remain.

A fourth problem with the natural blanket is that, while it reduces neutron leakage from the core, it still allows a high loss of neutrons from the enriched part of the core to the blanket region. Although many of the neutrons leaking into the natural blanket from the enriched portion of the core are absorbed by U-238 atoms, producing fissile Pu-239, most of that plutonium does not get burned because of the low power level in the natural blankets. The plutonium is generally not reprocessed, so most of the neutrons absorbed in the natural blanket are effectively lost forever.

Another type of axial blanket, disclosed in U.S 4,493,814 to Beard, Jr. et al. and assigned to the assignee of the present invention, substitutes for an axial blanket having a uniform density of naturally enriched uranium a three-tier axial blanket at each end of the fuel rod. For each blanket, two regions of standard density naturally enriched uranium sandwich a region of low density fuel having a U-235 enrichment equal to the U-235 enrichment of the fuel in the middle of the fuel rod. Beard, Jr. et al disclosed that the low density fuel region may be hollow annular pellets, lower density pellets or smaller pellets designed to reduce the uranium loading per unit length. This approach, while providing an improvement, may fail to reach optimum uranium burnup and fuel utilization for some applications.

The difficulties associated with presently utilized axial blankets are solved with the fuel rod design of the present invention. The fuel rod for use in a nuclear reactor fuel assembly includes an elongated hollow tube, sealed at both of its ends, and contains a fuel stack of fissile fuel. The fuel stack has a middle axial region wherein the fuel has a first U-235 isotopic enrichment greater than that of naturally enriched uranium. An axial blanket, disposed nearer to one of the ends than the middle axial region, has a second U-235 enrichment greater than that of naturally enriched uranium and less than the first enrichment.

The present invention will be more fully understood when reference is made to the following detailed drawings, wherein:

FIG. 1 is a perspective of a nuclear fuel rod.

FIG. 2 is a partial sectional view of the fuel rod of FIG. 1 embodying the present invention and containing fuel pellets.

FIG. 3 is a perspective of a fuel rod pellet shown in FIG. 2.

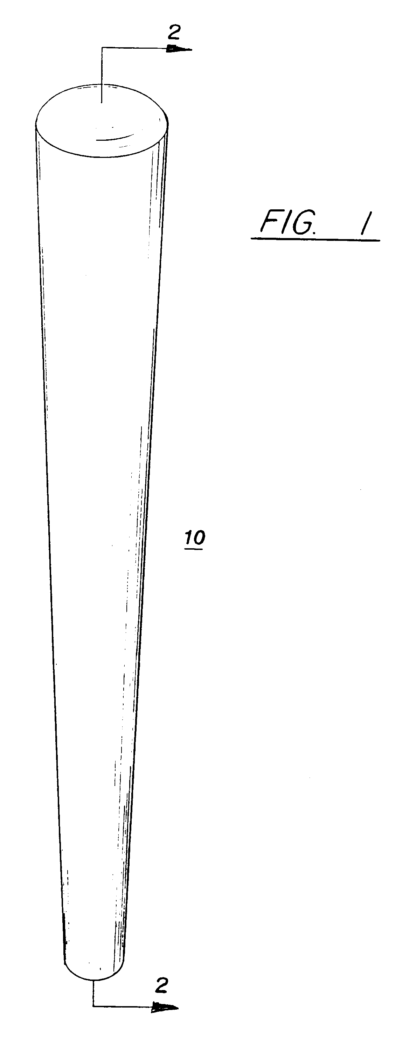

Referring to FIGS. 1 and 2, a fuel rod of the present invention is designated by the numeral **10**. A cladding tube **12** is sealed at its opposite ends by end plugs **14**. Within the sealed tube is a stack of fissile fuel pellets **16**. The pellets are generally cylindrical in shape and are stacked coaxially within the tube. The length of the fuel stack is about 144 inches for reactors built by Westinghouse Electric Co. The diameter of these fuel rods varies from reactor to reactor, and ranges from 0.36 inches to 0.44 inches. The pellets generally have a length about equal to 1.2 times the diameter.

In a middle region containing fuel pellets **16.1**, the pellets are solid cylinders of uranium oxide having a U-235 enrichment greater than that of naturally enriched uranium. Typically, the enrichment of the middle region will range between 3.4 - 5.0% U-235 by weight. This figure depends upon the requirements of the reactor operator. Disposed on either side of the middle region and towards the ends of the tube are top and bottom "axial blankets" made up of the fuel pellets **16.2**, **16.3.** The fuel pellets in the axial blankets are also uranium oxide but having an enrichment which is less than that of the middle region and greater than that of naturally enriched uranium.

There is a broad minimum in the fuel cycle cost benefit curve as a function of the blanket enrichment. This means that a single blanket enrichment will be satisfactory for a broad range of fuel enrichments for the middle region. In a preferred embodiment, the axial blankets will have an enrichment of 2.6% U-235 by weight. However, significant fuel cycle cost benefits can be achieved with enrichments of as low as 1.5%. The upper range of axial blanket enrichments which will achieve significant cost benefits will depend upon the enrichment of the middle region, but typically will be up to about 1% less than the middle region enrichment.

An additional consideration in fuel rod design is to provide plenum for gas byproducts of the fission process. The trend to higher and higher burnups results in the need for more and more plenum to keep the fuel rod internal pressure acceptable. Therefore, according to one embodiment of the present invention, plenum **18** is provided at the top of the fuel stack above the top axial blanket pellets **16.2.** An expansion spring **20** disposed between the top end plug **14** and the uppermost pellet of the top axial blanket keeps the fuel stack of pellets in place. In this embodiment the fuel pellets of the axial blankets are solid cylinders as is the more highly enriched fuel in the middle region.

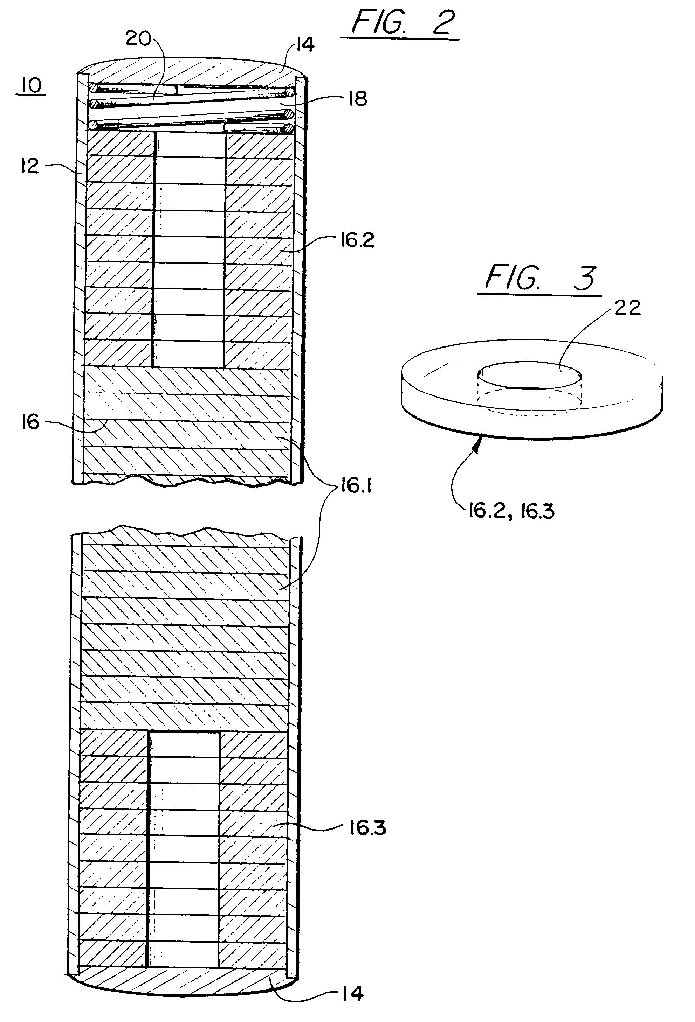

In another embodiment of this invention, additional plenum can be provided within the blanket pellets. Specifically, FIG. 3 shows a configuration for the axial blanket pellets **16.2**, **16.3** in which each pellet is an annulus having a cylindrical space **22** within. The spaces **22** define a continuous cylindrical channel within each blanket. The fuel pellets in the middle region may be solid cylinders or may also provide additional plenum. This embodiment also includes plenum **18** above the fuel stack.

The length of each of the mid enrichment blankets is optimally in the range from 6 inches to 10 inches. The length is likely to be longer than for a blanket having just naturally enriched uranium in order to further reduce leakage. This is possible because there is not the inherent large ore and separation cost penalty as in the case for fuel rods having a natural uranium blanket.

## Claims

1. A fuel rod comprising an elongated, hollow tube with sealed ends and fissile fuel contained within the tube, characterized in that the fuel comprises:
a middle region having a first enrichment of U-235 greater than that of natural uranium; and
an axial blanket disposed between an end of the tube and the middle region having a second enrichment of U-235 greater than that of natural uranium and less than that of the first enrichment.

2. The fuel rod of claim 1, further characterized in that the fuel comprises a plurality of pellets stacked within the tube.

3. The fuel rod of claim 1, further characterized in that the first enrichment is at least about 3.4% by weight.

4. The fuel rod of claim 3, further characterized in that the second enrichment is between about 1.5% by weight and about 1.0% by weight less than the first enrichment.

5. The fuel rod of claim 1, further characterized in that the axial blanket comprises a plurality of pellets that define a space extending through the blanket between the middle region and a sealed end on the tube.

6. The fuel rod of claim 5, further characterized in that each of the plurality of pellets is annular.

7. A fuel rod, comprising an elongated, hollow, cladding tube sealed at first and second ends thereof, a plurality of cylindrical fuel pellets disposed in a coaxial stack within the tube, the fuel pellets being comprised of a fissile material isotopically enriched with U-235, the stack being characterized by:
a contiguous middle region wherein the fuel pellets have a first U-235 enrichment of at least about 3.4% by weight;
a first axial blanket disposed between the first end of the tube and the middle region; and
a second axial blanket disposed between the second end of the tube and the middle region, wherein the fuel pellets of the first and second axial blankets have a U-235 enrichment of between about 1.5% by weight to about 1% by weight less than the first U-235 enrichment.

8. The fuel rod of claim 7, further characterized in that each of the fuel pellets of the first and second axial blankets are annular.

9. The fuel rod of claim 8, further characterized in that the coaxial stack has a length of about 144 inches, and the first and second axial blankets each have lengths being between about 6-10 inches.
